(19) Europäisches Patentamt
European Patent Office
Office européen des brevets

(11) **EP 2 661 346 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **12701984.2**

(22) Anmeldetag: **04.01.2012**

(51) Int Cl.:
*B05C 5/02* (2006.01)     *B05D 1/26* (2006.01)
*B05C 5/00* (2006.01)     *B29C 44/46* (2006.01)

(86) Internationale Anmeldenummer:
**PCT/EP2012/050070**

(87) Internationale Veröffentlichungsnummer:
**WO 2012/093129 (12.07.2012 Gazette 2012/28)**

(54) **VERFAHREN UND VORRICHTUNG ZUM AUFTRAG VON FLÜSSIGEN REAKTIONSGEMISCHEN AUF EINE DECKSCHICHT**

METHOD AND DEVICE FOR APPLYING LIQUID REACTION MIXTURES TO A COVER LAYER

PROCÉDÉ ET DISPOSITIF DESTINÉS À APPLIQUER DES MÉLANGES RÉACTIONNELS LIQUIDES SUR UNE COUCHE DE RECOUVREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.01.2011 DE 202011001109 U**

(43) Veröffentlichungstag der Anmeldung:
**13.11.2013 Patentblatt 2013/46**

(73) Patentinhaber: **BASF SE**
**67056 Ludwigshafen am Rhein (DE)**

(72) Erfinder:
• **THATER, Michael**
  **49424 Goldenstedt (DE)**
• **SCHMIT, Ansgar**
  **49078 Osnabrück (DE)**

(74) Vertreter: **BASF IP Association**
**BASF SE**
**ZRX-C6**
**67056 Ludwigshafen (DE)**

(56) Entgegenhaltungen:
EP-A2- 1 116 521     DE-U1-202009 015 838
US-A1- 2010 038 444

**Beschreibung**

Die Erfindung betrifft ein Verfahren zur Herstellung von Verbundelementen umfassend das Auftragen von flüssigen Reaktionsgemischen auf eine Deckschicht mittels einer Auftragsvorrichtung, wobei die Deckschicht kontinuierlich bewegt wird und die Auftragsvorrichtung mindestens einem Rohr a) umfasst, das mit einer Zuführung des flüssigen Reaktionsgemisches und Öffnungen b) in Richtung der Deckschicht versehen ist und welches oberhalb der Deckschicht parallel zur Deckschichtenebene und rechtwinklig zur Bewegungsrichtung der Deckschicht angebracht ist, wobei die äußeren 1 bis 4 Öffnungen (b), die sich oberhalb des Randes der Deckschicht befinden, in einem Winkel von 1 bis 50° in Richtung des Randes der Deckschicht angebracht sind.

Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, im folgenden gemeinsam nur als PU-Schaumstoffe bezeichnet, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente zur Gestaltung von Fassaden verschiedenster Gebäude immer mehr an Bedeutung. Auch Sektionaltore werden verstärkt aus Sandwichelementen hergestellt. Als Deckschichten werden dabei neben beschichteten Stahlblechen auch Edelstahl-, Kupfer- oder Aluminiumbleche eingesetzt.

Das Verfahren erfolgt so, dass zunächst die flüssigen Einsatzkomponenten des Schaumstoffs, bei der Herstellung von Schaumstoffen auf Isocyanatbasis die Polyol- und die Isocyanatkomponente, vermischt werden, beispielsweise in einem Mischkopf, und von dort mittels einer Auftragsvorrichtung auf die Deckschicht aufgebracht werden, wo sie unter Aufschäumung miteinander reagieren und zum Schaumstoff aushärten. Als Auftragsvorrichtungen kommen zumeist mit Bohrungen versehene Rohre zum Einsatz, die über der Deckschicht so angebracht sind, dass die Benetzung der Deckschicht optimal erfolgen kann. Diese Rohre können im Folgenden auch als Gießharken oder einfach als Harken bezeichnet werden.

Dabei kann die Auftragsvorrichtung beweglich über der Deckschicht angebracht werden und durch oszillierende Bewegung die Reaktionsmischung auf die gesamte Fläche der Deckschicht aufbringen.

In jüngerer Zeit werden auch fest über der Deckschicht angebrachte Rohre verwendet. Derartige Vorrichtungen sind beispielsweise in WO 2009/077490, in WO 2008/104492 oder in WO 2008/018787 beschrieben.

Die Vorrichtungen sind üblicherweise aus Metall, vorzugsweise aus Stahl. Derartige Vorrichtungen sind mechanisch sehr stabil, müssen jedoch bei einer Verschmutzung, wie sie insbesondere durch Anbackungen von ausreagierten Polyurethanen erfolgt, aufwändig gereinigt werden.

In DE 202009015838.1, welches die Merkmale des Oberbegriffs von Anspruch 1 offenbart, werden auch Auftragsvorrichtungen aus Kunststoff beschrieben, die beim Auftreten von Anbackungen ersetzt und entsorgt werden können. Dadurch können die Stillstandszeiten der Anlagen reduziert werden.

Es hat sich gezeigt, dass bei den üblichen Auftragsvorrichtungen der Auftrag der Reaktionsmischung an den Rändern der Deckschicht häufig unzureichend ist. Dies ist vor allem der Fall, wenn die untere Deckschicht eine komplizierte Profilierung aufweist. Bei diesen Profilierungen entsteht ein toter Raum, in dem von oben kein Reaktionsgemisch eingetragen werden kann. Wenn die Auftragsvorrichtungen zu dicht über den Rändern der Deckschicht enden, kann Reaktionsmischung neben der Deckschicht aufkommen, was zu Produktverlusten und zu einer Verschmutzung der Anlage führen kann. Wenn man, um diese Nachteil zu vermeiden, die Auftragsvorrichtungen so anbringt, dass sie in einem größeren Abstand über den Rändern der Deckschicht endet, kann an den Rändern zu wenig Reaktionsmischung ankommen, was zu Qualitätsproblemen führen kann.

Es war die Aufgabe der Erfindung, das Verfahren zur Herstellung von Verbundelementen aus insbesondere metallischen Deckschichten und einem Kern aus PU-Schaumstoffen zu verbessern und einer gleichmäßigeren Verteilung bei der auch bei profilierten unteren Deckschichten in toten Bereichen direkt Reaktionsgemisch aufgetragen werden kann. Insbesondere sollte eine gleichmäßige Verteilung der flüssigen Ausgangsverbindungen der PU-Schaumstoffe auf der Deckschicht und eine gute Qualität der resultierenden Verbundelemente erreicht werden.

Die Aufgabe konnte überraschenderweise dadurch gelöst werden, dass bei der Austragsvorrichtung die äußeren 1 bis 4 Öffnungen, die sich über dem Rand der Deckschicht befinden, in einem Winkel von 1 bis 50° in Richtung des Randes der Deckschicht angebracht sind. Gegenstand der Erfindung ist demzufolge ein Verfahren zur Herstellung von Verbundelementen umfassend das Auftragen von flüssigen Reaktionsgemischen auf eine Deckschicht mittels einer Auftragsvorrichtung, wobei die Deckschicht kontinuierlich bewegt wird und die Auftragsvorrichtung mindestens ein Rohr a) umfasst, das mit einer Zuführung des flüssigen Reaktionsgemisches und Öffnungen b) in Richtung der Deckschicht versehen ist, und welches oberhalb der Deckschicht parallel zur Deckschichtenebene und rechtwinklig zur Bewegungsrichtung der Deckschicht angebracht ist, dadurch gekennzeichnet, dass die äußeren 1 bis 4 Öffnungen die sich oberhalb des Randes der Deckschicht befinden, in einem Winkel von 1 bis 50° in Richtung des Randes der Deckschicht angebracht sind.

Die Zuführung des flüssigen Reaktionsgemisches erfolgt vorzugsweise in der Mitte des Rohres a). Prinzipiell kann die Reaktionsmischung auch an einem Ende des Rohres erfolgen. Diese Ausführungsform ist nicht bevorzugt, da es hierbei zu einem zu starken Druckaufbau innerhalb des Rohres kommen kann.

Wenn die Zuführung des flüssigen Reaktionsgemisches in der Mitte des Rohres a) erfolgt, können die Öffnungen b) symmetrisch oder unsymmetrisch angeordnet sein. Eine symmetrische Anordnung bedeutet, dass auf beiden Seiten der Zuführung die Öffnungen b) gleich angeordnet sind, das heißt es ist jeweils die gleiche Anzahl an Öffnungen b) vorhanden, die jeweils den gleichen Abstand von der Mitte haben.

Bei einer unsymmetrischen Anordnung der Öffnungen b) sind auf beiden Seiten der Zuführung die Öffnungen b) unterschiedlich angebracht. Vorzugsweise unterscheiden sich hierbei nur die Öffnungen b), die im Winkel angebracht sind, voneinander. Diese Ausführungsform wird insbesondere dann eingesetzt, wenn die Ränder der Deckschicht unterschiedliche Konturen aufweisen. Dabei können auf beiden Seiten, unterschiedlich voneinander, eine, zwei, drei oder vier Öffnungen b) von 1 bis 50° in Richtung des Randes der Deckschicht angebracht werden. Mit dieser Ausführungsform lassen sich auch komplizierte Konturen an den Rändern der Deckschicht ausschäumen. So kann in einer Ausführungsform die Auftragsvorrichtung auf einer Seite eine und auf der anderen Seite drei Öffnungen b) aufweisen.

In dieser Ausführungsform ist die Auftragsvorrichtung, wie oben ausgeführt, nicht mehr symmetrisch und trägt somit die Reaktionsmischungen ungleichmäßig aus. Dies ist dann von Vorteil, wenn schwierige Paneelgeometrien perfekt ausgefüllt werden sollen. Dies ist insbesondere bei der Fertigung von Paneelen für Sektionaltore der Fall.

Sowohl bei der symmetrischen als auch bei der unsymmetrischen Anordnung der Öffnungen b) ist es möglich, in der Mitte des Rohres a), das heißt an der Stelle, an der das flüssige Reaktionsgemisch zugeführt wird, eine Öffnung b) anzubringen. Hierdurch ist es möglich, besser auf die Profilierung, das heißt auf die geometrische Form der Bleche einzugehen. Dies ist besonders bei Dachprofilen und/oder bei kleinen Sicken, wie in Paneelen für Sektionaltore, von Vorteil. Wenn die Reaktionsmischung nicht direkt auf den kleinen Sicken aufgetragen wird, kann es zu Problemen mit Bodenstörungen und/oder Lufteinschlüssen in diesem Bereich kommen.

Wenn mehr als eine der Öffnungen b) im Winkel angebracht sind, ist es bevorzugt, dass der Winkel zum Rand der Deckschicht hin zunimmt. dies erlaubt eine schmalere Bauweise des Rohres a). Dadurch ist es leichter zu reinigen. Außerdem erlaubt diese Ausführungsform einen breiteren Auftrag. Wenn das Rohr a) in der Höhe zur Deckschicht verstellt werden kann, kann man die Auftragsbreite variieren. Ja höher das Rohr a) steht, desto breiter ist der Auftrag. Das Rohr a) ist damit universeller einsetzbar. Es kommt nur noch auf die Austragsmenge an, nicht mehr so stark auf die Auftragsbreite des Rohres a) an, da diese über die Höhe eingestellt werden kann.

Dabei wird die Größe des Winkels der äußeren Öffnungen b) bevorzugt nach der Formel

$$\text{Kleinerer Winkel} = \text{Größerer Winkel} / \text{Anzahl der im Winkel angebrachten Öffnungen}.$$

bestimmt.

Das heißt, bei zwei Öffnungen b) ist der Wert für den kleineren Winkel die Hälfte des größeren, bei drei Öffnungen b) ist der Wert 1/3 des größten Winkels, bei 4 Öffnungen b) 1/4 des größten Winkels.

Der Abstand der Öffnungen b) voneinander beträgt vorzugsweise 2 bis 200 mm. In besonderen Ausführungsformen der Erfindung kann der Abstand der Öffnungen b), der in einem Winkel angebracht ist, weniger als 2 mm betragen. Normmalerweise wird auch dort ein Abstand von 1 mm nicht unterschritten.

Die im Winkel angebrachten Öffnungen b) können im gleichen Abstand zueinander und auch zu den nicht im Winkel angebrachten Öffnungen b) angebracht werden.

Es ist auch möglich, die Winkel angebrachten Öffnungen b) im gleichen Abstand zueinander, jedoch in einem anderen, vorzugsweise in einem geringeren Abstand als dem der nicht im Winkel angeordneten Öffnungen b) anzubringen.

In diesem Fall ist es bevorzugt, den Abstand der Öffnungen b) umso kleiner zu wählen, je größer der Winkel der Öffnungen b) ist.

Die Durchmesser der Öffnungen b) liegen vorzugsweise im Bereich zwischen 0,1 und 10 mm. Vorzugsweise liegt der Durchmesser der Bohrungen zwischen 1 und 6 mm, insbesondere zwischen 1,5 und 4 mm.

Diese können über das gesamte Rohr a) konstant bleiben. In einer besonderen Ausführungsform der Erfindung können die Durchmesser der Öffnungen b) über den Verlauf des Rohres a) auch unterschiedlich sein. Dies hängt insbesondere davon ab, wie viel Schaum an den einzelnen Bereichen, insbesondere den Randbereichen der Deckschichten benötigt wird.

Prinzipiell kann der Durchmesser der Bohrungen b) über die gesamte Breite des Rohres a) variieren.

In einer Ausführungsform der Erfindung nimmt der Durchmesser der Öffnungen b) in Richtung des Randes der Deckschicht ab. In einer weiteren Ausführungsform der Erfindung nimmt der

Durchmesser der Öffnungen b) in Richtung des Randes der Deckschicht zu. In einer Ausführungsform der Erfindung weisen die Öffnungen b), die in einem Winkel angeordnet sind, einen geringeren Durchmesser auf als die anderen.

In einer weiteren bevorzugten Ausführungsform der Erfindung sind die Öffnungen b) so ausgestaltet, dass das flüssige Reaktionsgemisches bei jeder Öffnung mit der gleichen Geschwindigkeit austritt. Dies kann beispielsweise erreicht werden, indem man die Durchmesser der Öffnungen b) variiert. In einer bevorzugten Ausführungsform wird dies erreicht, indem die Länge der Öffnungen variiert wird. Unter der Länge der Öffnungen wird die Entfernung von der Innenseite des Rohres a), an der die Öffnungen b) angebracht sind, zu dem Punkt, in dem das Reaktionsgemisch aus der Auftragsvorrichtung austritt, verstanden.

Um eine gleichmäßige Austrittsgeschwindigkeit zu erreichen, die nimmt die Länge der Öffnungen b) von der Zuführung der Reaktionsmischung zu den Rändern des Rohres a) hin ab.

Die Länge der Öffnungen b) kann variiert werden, indem bei konstantem Außendurchmesser des Rohres a) der Innendurchmesser von der Mitte zu den Rändern hin abnimmt. Diese Ausführungsform ist jedoch von der Herstellung her schwierig und daher nicht bevorzugt.

Der Durchmesser des Rohres a) beträgt vorzugsweise 0,2 bis 5 cm.

In einer Ausführungsform der Erfindung kann die Länge der Öffnungen b) variiert werden, indem das Rohr a) an der Seite, an der die Öffnungen b) angebracht sind, so verändert wird, dass die Öffnungen b) verlängert werden. Auf diese Ausführungsform wird weiter unten näher eingegangen.

In einer Ausführungsform der Erfindung können auch zwei oder mehrere, insbesondere zwei nebeneinander angeordnete Rohre a) verwendet werden. Dies kann insbesondere bei sehr breiten Deckschichten vorteilhaft sein.

Das Rohr a) kann aus Metall bestehen. Hier ist Stahl, insbesondere rostfreier Stahl, bevorzugt. Diese Ausführungsform zeichnet sich durch eine hohe mechanische Stabilität aus.

Bei dieser Ausführungsform kann die Länge der Öffnungen b) variiert werden, indem ein flaches Metallteil mit einer entsprechenden Länge und Dicke auf das Rohr a) aufgeschweißt wird. Das aufgeschweißte Metallteil wird auf Länge der Öffnungen b) stufenweise angepasst, beispielsweise abgefräst. Die Öffnungen b) werden angebracht, insbesondere hineingebohrt und danach vorzugsweise entgratet. Anschließend kann die Vorrichtung noch gehärtet werden. Es sind hierzu auch noch andere Möglichkeiten der Herstellung denkbar.

Im Verlauf des Betriebs der Vorrichtungen kommt es zu einer Verschmutzung durch Reaktionsprodukte. Daher muss die Vorrichtung regelmäßig gereinigt werden, insbesondere durch Spülen mit einem Lösungsmittel.

In einer anderen Ausführungsform der Erfindung besteht das Rohr a) aus Kunststoff. Bevorzugt sind hierbei thermoplastische Kunststoffe. Aus Sicherheitsgründen sollte gewährleistet sein, dass der Kunststoff sich nicht elektrostatisch auflädt da bei der Herstellung der Schaumstoffe häufig Kohlenwasserstoffe als Treibmittel eingesetzt werden, die brennbar sind.

Bevorzugt kann der Kunststoff ein Polyamid oder ein Polyoxymethylen (POM), insbesondere ein Polyamid sein. Um die mechanische Stabilität zu verbessern, kann der Kunststoff durch Füllstoffe verstärkt sein. Ein Beispiel hierfür ist glasfaserverstärktes Polyamid.

Die aus Kunststoff bestehenden Rohre a) werden vorzugsweise durch Spritzguss hergestellt.

Bei der Verwendung von Kunststoff kommt es zu einer Reduktion des Gewichts gegenüber der Verwendung von Metall. Weiterhin ist die Herstellung in großer Stückzahl ist günstiger. Wenn die die Vorrichtung verschmutzt ist, kann sie entsorgt und durch eine neue Vorrichtung ersetzt werden.

In einer Ausführungsform der Erfindung werden mindestens zwei mit Öffnungen b) versehene Rohre a), die insbesondere so angeordnet sind, dass sie eine gerade Linie bilden. Vorzugsweise werden 2 bis 4, besonders bevorzugt 2 bis 3 und insbesondere 2 Rohre a) verwendet. Bei der Verwendung mehrerer Rohre a) sind die Öffnungen b) nur an der Seite, die sich über dem Rand der Deckschicht befinden, in einem Winkel angebracht.

Die Auftragsvorrichtung ist vorzugsweise in einer Höhe von 1 bis 40 cm, bevorzugt 10 bis 30 cm, und insbesondere 15 bis 25 cm über der unteren Deckschicht angebracht. Der genaue Abstand muss der Deckschichtprofilierung angepasst sein und kann daher variieren.

Die Rohre a) beziehungsweise die nebeneinander angeordneten Rohre zusammen können eine Länge haben, die gleich der Breite der Deckschicht ist. dies ist jedoch nicht bevorzugt, da hier Produkt neben die Deckschicht gelangen kann.

Vorzugsweise ist daher die Länge des Rohres a) geringer als die Breite der Deckschicht, um sicherzustellen. Dabei ist das Rohr a) mittig über der Deckschicht angeordnet. Vorzugsweise bedeckt die Gießharke mindestens 60, insbesondere mindestens 70 % der Breite der Deckschicht. Bei einer Breite der Deckschicht von 1,20 m, wie sie bei Sandwich-Elementen üblich ist, wäre in diesem Fall auf jeder Seite eine Breite von 18 cm nicht von der Gießharke bedeckt. Vorzugsweise bedecken die Gießharke beziehungsweise die nebeneinander angeordneten Gießharken mindestens 60, insbesondere mindestens 70 % der Breite der Deckschicht. Auf Grund der im Winkel angebrachten Bohrungen b) ist es möglich, die Länge des Rohres a) gegenüber solchen, bei denen keine Bohrungen b) angebracht sind, zu verringern.

Bei den flüssigen Reaktionsgemischen handelt es sich vorzugsweise um solche zur Herstellung von Schaumstoffen auf Isocyanatbasis, insbesondere Polyurethan- und Polyisocyanuratschaumstoffe. Diese werden, wie allgemein bekannt, durch Umsetzung von Polyisocyanaten mit Verbindungen mit mindestens zwei mit Isocyanatgruppen reaktiven Wasserstoffatomen in Anwesenheit von Treibmitteln hergestellt. Die Komponenten werden in einer üblichen Mischeinrichtung, beispielsweise einem Hoch- oder einem Niederdruckmischkopf, gemischt und dem Rohr a) zugeführt.

Dies erfolgt üblicherweise mittels einer zwischen Mischeinrichtung und Rohr a) angebrachten Verbindung. Diese ist vorzugsweise als Rohr ausgestaltet, im Falle der Verwendung von mehreren Rohren ist jedes mit der Zuführung verbunden. Dies kann durch ein Rohr geschehen, von dem wiederum Verbindungsrohre zu den Rohren ausgehen.

Der Durchmesser der Zuführungen ist vorzugsweise konstant. Er ist von der benötigten Menge an Reaktionsmischung abhängig. vorzugsweise liegt der Durchmesser zwischen 4 und 30 mm, besonders bevorzugt zwischen 6 und 22 mm.

Die erfindungsgemäße Auftragsvorrichtung wird vorzugsweise so ausgestaltet, dass die Menge des auf die Deckschicht aufgetragenen flüssigen Ausgangsmaterials für den Hartschaumstoff auf Isocyanatbasis zwischen 2 kg/min und 100 kg/min, bevorzugt zwischen 8 kg/min und 60 kg/min und insbesondere zwischen 4 kg/min und 50 kg/min beträgt.

Die Viskosität des flüssigen Ausgangsmaterials für den Hartschaumstoff auf Isocyanatbasis liegt vorzugsweise bei 25 °C zwischen 50 mPa*s und 2000 mPa*s, besonders bevorzugt zwischen 100 mPa*s und 1000 mPa*s.

Als Deckschicht können flexible oder starre, bevorzugt starre Deckschichten, wie Gipskartonplatten, Glasfliese, Aluminiumfolien, Aluminium-, Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Die Stahlbleche können vorbehandelt werden, beispielsweise mit Corona-, Lichtbogen-, Plasmabehandlung oder anderen üblichen Methoden.

Die Deckschicht wird vorzugsweise mit einer konstanten Geschwindigkeit von 1 bis 60 m/min, bevorzugt 2 bis 150 m/min, bevorzugt 2 bis 50 m/min. besonders bevorzugt 2,5 bis 30 m/min und insbesondere 2,5 bis 20 m/min transportiert. Dabei befindet sich die Deckschicht zumindest ab dem Auftrag des Schaumsystems, vorzugsweise während der gesamten Zeitdauer ab dem Aufbringen des Haftvermittlers in einer waagerechten Position.

Beim erfindungsgemäßen Verfahren werden dabei bei der Verwendung von Blechen und Folien als Deckschichten nacheinander die Deckschichten von einer Rolle abgecoilt, gegebenenfalls profiliert, erwärmt, gegebenenfalls vorbehandelt, um die Beschäumbarkeit mit Polyurethan zu erhöhen, optional der Haftvermittler aufgetragen, mit dem Ausgangsmaterial für den Hartschaumstoff auf Isocyanatbasis a) mittels der erfindungsgemäßen stehenden Harke beschäumt, im Doppelband ausgehärtet und letztlich auf die gewünschte Länge zugeschnitten.

Die Profilierung der Deckschichten erfolgt vorzugsweise mittels Metallwalzen, die das Blech in die gewünschte Form profilieren, kanten, knicken und/oder walzen.

Als Hartschaumstoffe auf Isocyanatbasis können die üblichen Produkte eingesetzt werden. Diese sind beispielsweise beschrieben in WO 2009/077490.

Zur besseren Haftung der Hartschaumstoffe auf Isocyanatbasis kann sich zwischen Deckschicht und Schaumstoff ein Haftvermittler, vorzugsweise auf Basis von Polyurethan, befinden. Dieser kann auf übliche und bekannt Weise aufgebracht werden. In einer vorteilhaften Ausführungsform der Erfindung erfolgt der Auftrag des Haftvermittlers mittels einer rotierenden Scheibe. Ein solches Verfahren ist beispielsweise in WO 2006/029786 beschrieben.

Das erfindungsgemäße Verfahren hat eine Reihe von Vorteilen.

Bei den Auftragsvorrichtungen des Standes der Technik bestand das Problem, dass es bei starken Profilierungen der Deckschichten und einer nicht dazu abgestimmten Materialverteilung zu Störungen beim Auftrag der Reaktionsmischung auf die Deckschicht kommen kann. Diese Störungen können später zu Blasen an den resultierenden Verbundelementen führen und sind daher nicht erwünscht.

Bisher wurde das Reaktionsgemisch an den am nächsten zur Profilierung liegenden Punkt davor abgelegt und der Schaum musste sich in die Profilierung schieben. Dies führte in der Profilierung zu einem Schaum mit schlechteren mechanischen Eigenschaften. Insbesondere die Druckfestigkeiten der in die Profilierung geschobenen Schäume sind deutlich geringer als an den übrigen bereichen des Verbundelements.

Durch eine Anordnung der äußeren Öffnungen b) im Winkel kann flüssige Reaktionsmischung in diesen Bereich gelangen und dort aufschäumen. Dadurch kommt es zu einem homogenen Eigenschaftsprofil des Schaums im gesamten Verbundelement.

Durch eine optimierte Verteilung (das Material wird da ausgetragen wo es benötigt wird - hierbei können ungleichmäßige Materialaustrage erwünscht sein.) können Probleme wie Bodenstörungen und Schiebezonen/bereiche behoben werden.

Gegenstand der vorliegenden Erfindung ist demzufolge ein Verfahren zur Herstellung von Verbundelementen umfassend das Auftragen von flüssigen Reaktionsgemischen auf eine Deckschicht mittels einer Auftragsvorrichtung, wobei die Deckschicht kontinuierlich bewegt wird, das flüssigen Reaktionsgemisch auf die Deckschicht aufgebracht wird

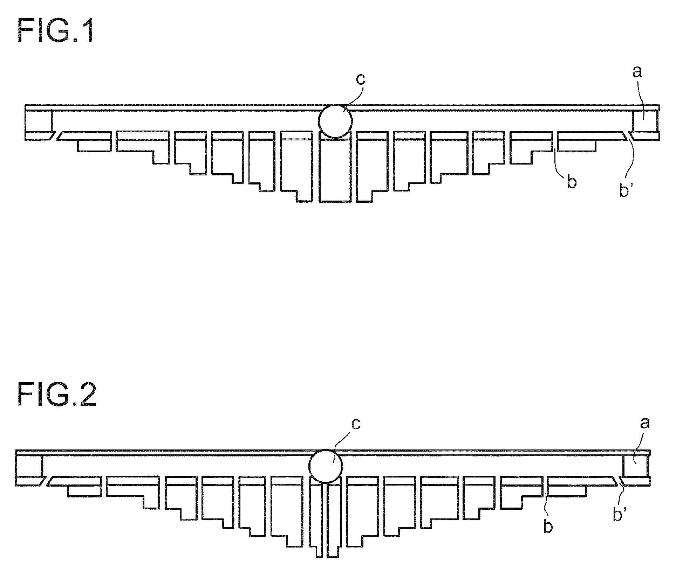

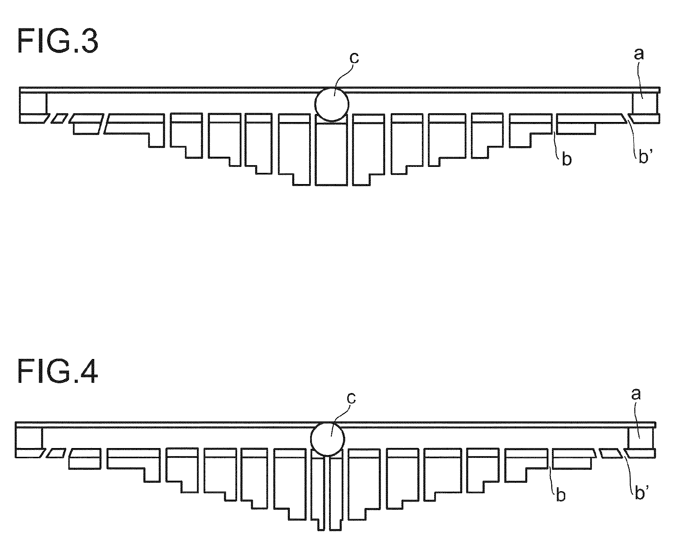

Die Erfindung wird in den Figuren 1 bis 4 näher beschrieben.

In allen Figuren bedeutet a) das Rohr a), b) die geraden Öffnungen b), b' die im Winkel angeordneten Öffnungen b) c) die Zuführung des Reaktionsgemisches. In allen Figuren ist erkennbar, dass die Länge der Öffnungen b) nach außen hin abnimmt.

Figur 1 zeigt eine symmetrisch gestaltete Auftragsvorrichtung mit jeweils einer im Winkel angeordneten Öffnung b).

Figur 2 zeigt die gleiche Anordnung wie Figur 1, wobei zusätzlich in der Mitte, unterhalb der Zuführung des Reaktionsgemisches eine Bohrung b) angebracht ist.

Figur 3 zeigt eine unsymmetrisch gestaltete Auftragsvorrichtung mit einer im Winkel angeordneten Öffnung b) auf einer und drei im Winkel angeordneten Öffnungen b) auf der anderen Seite.

Figur 4 zeigt eine symmetrisch gestaltete Auftragsvorrichtung mit jeweils zwei im Winkel angeordneten Öffnungen b).

**Patentansprüche**

1. Verfahren zur Herstellung von Verbundelementen umfassend das Auftragen von flüssigen Reaktionsgemischen auf eine Deckschicht mittels einer Auftragsvorrichtung, wobei die Deckschicht kontinuierlich bewegt wird und die Auftragsvorrichtung mindestens ein Rohr a) umfasst, das mit einer Zuführung des flüssigen Reaktionsgemisches und Öffnungen b) in Richtung der Deckschicht versehen ist und welches oberhalb der Deckschicht parallel zur Deckschichtenebene und rechtwinklig zur Bewegungsrichtung der Deckschicht angebracht ist, **dadurch gekennzeichnet, dass** die äußeren 1 bis 4 Öffnungen b), die sich oberhalb des Randes der Deckschicht befinden, in einem Winkel von 1 bis 50° in Richtung des Randes der Deckschicht angebracht sind.

2. Verfahren nach Anspruch 1 , **dadurch gekennzeichnet, dass** die Größe des Winkels der Öffnungen b) in Richtung des Randes der Deckschicht zunimmt.

3. Verfahren nach Anspruch 1 oder 2, **dadurch gekennzeichnet, dass** die Größe des Winkels der äußeren Öffnungen b) nach der Formel

$$\text{Kleinerer Winkel} = \text{Größerer Winkel} \, / \, \text{Anzahl der im Winkel angebrachten Öffnungen}$$

bestimmt wird.

4. Verfahren nach einem der Ansprüche 1 bis 3, **dadurch gekennzeichnet, dass** das Rohr a) unbeweglich angeordnet ist.

5. Verfahren nach einem der Ansprüche 1 bis 4, **dadurch gekennzeichnet, dass** die Öffnungen b) so ausgestaltet sind, dass das flüssige Reaktionsgemisch aus allen Öffnungen b) mit der gleichen Geschwindigkeit austritt.

6. Verfahren nach einem der Ansprüche 1 bis 5, **dadurch gekennzeichnet, dass** der Durchmesser der Öffnungen b) von der Zuführung des flüssigen Reaktionsgemisches zu den Rändern des Rohres a) abnimmt.

7. Verfahren nach einem der Ansprüche 1 bis 6, **dadurch gekennzeichnet, dass** die Länge der Öffnungen b) von der Zuführung des flüssigen Reaktionsgemisches zu den Rändern des Rohres a) abnimmt.

8. Verfahren nach einem der Ansprüche 1 bis 7, **dadurch gekennzeichnet, dass** das Rohr a) so angebracht ist, das es über mindestens 60 % der Breite der Deckschicht reicht.

9. Verfahren nach einem der Ansprüche 1 bis 8, **dadurch gekennzeichnet, dass** das Rohr a) in einer Höhe von 1 bis 40 cm oberhalb der Deckschicht angebracht ist.

10. Verfahren nach einem der Ansprüche 1 bis 9, **dadurch gekennzeichnet, dass** sich die Zuführung des flüssigen Reaktionsgemisches in der Mitte des Rohres a) befindet.

11. Verfahren nach einem der Ansprüche 1 bis 10, **dadurch gekennzeichnet, dass** der Durchmesser des Rohres a) 0,2 bis 5 cm beträgt.

12. Verfahren nach einem der Ansprüche 1 bis 11, **dadurch gekennzeichnet, dass** der Durchmesser der Öffnungen b) 0,1 bis 10 mm beträgt.

13. Verfahren nach einem der Ansprüche 1 bis 12, **dadurch gekennzeichnet, dass** der Abstand zwischen den Öffnungen b) 2 bis 200 mm beträgt.

14. Verfahren nach einem der Ansprüche 1 bis 13, **dadurch gekennzeichnet, dass** der Abstand der im Winkel von 1 bis 50° in Richtung des Randes der Deckschicht angebrachten Öffnungen von der Mitte zu den Rändern geringer wird.

15. Verfahren nach einem der Ansprüche 1 bis 14, **dadurch gekennzeichnet, dass** das Rohr a) aus Metall besteht.

16. Verfahren nach einem der Ansprüche 1 bis 14, **dadurch gekennzeichnet, dass** das Rohr a) aus Kunststoff besteht.

17. Verfahren nach einem der Ansprüche 1 bis 16, **dadurch gekennzeichnet, dass** zwei nebeneinander angeordnete Rohre a) verwendet werden.

**Claims**

1. A method for producing composite elements comprising the application of liquid reaction mixtures to an outer layer by means of an applicator, the outer layer being continuously moved and the applicator comprising at least one pipe a), which is provided with a feed for the liquid reaction mixture and openings b) in the direction of the outer layer and which is provided above the outer layer parallel to the plane of the outer layer and at right angles to the direction of movement of the outer layer, wherein the outer 1 to 4 openings b), which are located above the edge of the outer layer, are provided at an angle of 1 to 50° in the direction of the edge of the outer layer.

2. The method according to claim 1, wherein the size of the angle of the openings b) increases in the direction of the edge of the outer layer.

3. The method according to claim 1 or 2, wherein the size of the angle of the outer openings b) is determined by the formula

```
Smaller angle = greater angle / number of openings
provided at an angle.
```

4. The method according to one of claims 1 to 3, wherein the pipe a) is immovably arranged.

5. The method according to one of claims 1 to 4, wherein the openings b) are designed such that the liquid reaction mixture emerges from all of the openings b) at the same rate.

6. The method according to one of claims 1 to 5, wherein the diameter of the openings b) decreases from the feed for the liquid reaction mixture to the end regions of the pipe a).

7. The method according to one of claims 1 to 6, wherein the length of the openings b) decreases from the feed for the liquid reaction mixture to the end regions of the pipe a).

8. The method according to one of claims 1 to 7, wherein the pipe a) is provided in such a way that it reaches over at least 60 % of the width of the outer layer.

9. The method according to one of claims 1 to 8, wherein the pipe a) is provided at a height of 1 to 40 cm above the outer layer.

10. The method according to one of claims 1 to 9, wherein the feed for the liquid reaction mixture is located in the middle of the pipe a).

11. The method according to one of claims 1 to 10, wherein the diameter of the pipe a) is 0.2 to 5 cm.

12. The method according to one of claims 1 to 11, wherein the diameter of the openings b) is 0.1 to 10 mm.

13. The method according to one of claims 1 to 12, wherein the distance between the openings b) is 2 to 200 mm.

**14.** The method according to one of claims 1 to 13, wherein the distance between the openings provided at an angle of 1 to 50° in the direction of the edge of the outer layer becomes less from the middle to the end regions.

**15.** The method according to one of claims 1 to 14, wherein the pipe a) consists of metal.

**16.** The method according to one of claims 1 to 15, wherein the pipe a) consists of plastic.

**17.** The method according to one of claims 1 to 16, wherein two pipes a) arranged next to one another are used.

## Revendications

**1.** Procédé pour la fabrication d'éléments composites, comprenant l'application de mélanges réactionnels liquides sur une couche de recouvrement au moyen d'un dispositif d'application, la couche de recouvrement étant déplacée en continu et le dispositif d'application comprenant au moins un tube a), qui est pourvu d'une alimentation en mélange réactionnel liquide et d'ouvertures b) dans le sens de la couche de recouvrement et qui est disposé au-dessus de la couche de recouvrement, parallèlement au plan de la couche de recouvrement et perpendiculairement à la direction de déplacement de la couche de recouvrement, **caractérisé en ce que** les 1 à 4 ouvertures b) les plus externes, qui se trouvent au-dessus du bord de la couche de recouvrement, sont agencées sous un angle de 1 à 50° dans la direction du bord de la couche de recouvrement.

**2.** Procédé selon la revendication 1, **caractérisé en ce que** la dimension de l'angle des ouvertures b) augmente dans le sens vers le bord de la couche de recouvrement.

**3.** Procédé selon la revendication 1 ou 2, **caractérisé en ce que** la dimension de l'angle des ouvertures b) externes est déterminée selon la formule

```
petit angle = grand angle/nombre d'ouvertures agencées
sous l'angle.
```

**4.** Procédé selon l'une quelconque des revendications 1 à 3, **caractérisé en ce que** le tube a) est disposé de manière immobile.

**5.** Procédé selon l'une quelconque des revendications 1 à 4, **caractérisé en ce que** les ouvertures b) sont réalisées de manière telle que le mélange réactionnel liquide sort de toutes les ouvertures b) à la même vitesse.

**6.** Procédé selon l'une quelconque des revendications 1 à 5, **caractérisé en ce que** le diamètre des ouvertures b) diminue de l'alimentation en milieu réactionnel liquide vers les bords du tube a).

**7.** Procédé selon l'une quelconque des revendications 1 à 6, **caractérisé en ce que** la longueur des ouvertures b) diminue de l'alimentation en milieu réactionnel liquide vers les bords du tube a).

**8.** Procédé selon l'une quelconque des revendications 1 à 7, **caractérisé en ce que** le tube a) est agencé de manière telle qu'il s'étend sur au moins 60% de la largeur de la couche de recouvrement.

**9.** Procédé selon l'une quelconque des revendications 1 à 8, **caractérisé en ce que** le tube a) est agencé à une hauteur de 1 à 40 cm au-dessus de la couche de recouvrement.

**10.** Procédé selon l'une quelconque des revendications 1 à 9, **caractérisé en ce que** l'alimentation en milieu réactionnel liquide se trouve au centre du tube a).

**11.** Procédé selon l'une quelconque des revendications 1 à 10, **caractérisé en ce que** le diamètre du tube a) est de 0,2 à 5 cm.

**12.** Procédé selon l'une quelconque des revendications 1 à 11, **caractérisé en ce que** le diamètre des ouvertures b) est de 0,1 à 10 mm.

**13.** Procédé selon l'une quelconque des revendications 1 à 12, **caractérisé en ce que** la distance entre les ouvertures b) est de 2 à 200 mm.

**14.** Procédé selon l'une quelconque des revendications 1 à 13, **caractérisé en ce que** la distance des ouvertures agencées sous un angle de 1 à 50° dans le sens vers le bord de la couche de recouvrement diminue du centre jusqu'au bord.

**15.** Procédé selon l'une quelconque des revendications 1 à 14, **caractérisé en ce que** le tube a) est en métal.

**16.** Procédé selon l'une quelconque des revendications 1 à 14, **caractérisé en ce que** le tube a) est en matériau synthétique.

**17.** Procédé selon l'une quelconque des revendications 1 à 16, **caractérisé en ce que** deux tubes a) disposés l'un à côté de l'autre sont utilisés.

EP 2 661 346 B1

FIG.1

c

a

b

b'

FIG.2

c

a

b

b'

10

**FIG.3**

**FIG.4**

**IN DER BESCHREIBUNG AUFGEFÜHRTE DOKUMENTE**

**In der Beschreibung aufgeführte Patentdokumente**

- WO 2009077490 A
- WO 2008104492 A
- WO 2008018787 A
- DE 202009015838
- WO 2006029786 A